# EUROPEAN PATENT SPECIFICATION

(11) **EP 2 915 907 B1**
(45) Date of publication and mention of the grant of the patent: **18.07.2018**
(21) Application number: 13851961.6
(22) Date of filing: 28.10.2013
(51) Int. Cl.: H01M 8/0656, H01M 8/1018

(54) **PHOTOSEMICONDUCTOR ELECTRODE, PHOTOELECTROCHEMICAL CELL, AND ENERGY SYSTEM**
LICHTHALBLEITERELEKTRODE, FOTOELEKTROCHEMISCHE ZELLE UND ENERGIESYSTEM
ÉLECTRODE À PHOTO-SEMICONDUCTEUR, CELLULE PHOTO-ÉLECTROCHIMIQUE, ET SYSTÈME ÉNERGÉTIQUE

(30) Priority: 31.10.2012 JP 2012241192
(43) Date of publication of application: 09.09.2015
(73) Proprietor: Panasonic Intellectual Property Management Co., Ltd., Osaka-shi, Osaka 540-6207 (JP)
(72) Inventor: KOZAWA, Yoshihiro, Osaka-shi, Osaka 540-6207 (JP); TAMURA, Satoru, Osaka-shi, Osaka 540-6207 (JP); MIYATA, Nobuhiro, Osaka-shi, Osaka 540-6207 (JP); KURABUCHI, Takahiro, Osaka-shi, Osaka 540-6207 (JP); NOMURA, Takaiki, Osaka-shi, Osaka 540-6207 (JP); HATO, Kazuhito, Osaka-shi, Osaka 540-6207 (JP)
(74) Representative: Eisenführ Speiser
(86) International application number: PCT/JP2013/006368
(87) International publication number: WO 2014/068944

(56) References cited:
- EP-A1- 2 789 580
- WO-A1-2011/121932
- JP-A- 2006 057 170
- US-A1- 2012 156 578
- KAZUHIKO MAEDA ET AL: "SrNbO 2 N as a Water-Splitting Photoanode with a Wide Visible-Light Absorption Band", JOURNAL OF THE AMERICAN CHEMICAL SOCIETY, vol. 133, no. 32, 17 August 2011 (2011-08-17), pages 12334-12337, XP055217488, ISSN: 0002-7863, DOI: 10.1021/ja203391w & Kazuhiko Maeda ET AL: "Supporting Information S1 SrNbO 2 N as a Water-Splitting Photoanode with a Wide Visible Light Absorption Band, supporting information", , 19 July 2011 (2011-07-19), XP055217718, Retrieved from the Internet: URL:http://pubs.acs.org/doi/suppl/10.1021/ ja203391w/suppl_file/ja203391w_si_001.pdf [retrieved on 2015-10-01]
- CLAIRE LE PAVEN-THIVET ET AL: "Photoelectrochemical Properties of Crystalline Perovskite Lanthanum Titanium Oxynitride Films under Visible Light", JOURNAL OF PHYSICAL CHEMISTRY C, vol. 113, no. 15, 16 April 2009 (2009-04-16), pages 6156-6162, XP055217786, ISSN: 1932-7447, DOI: 10.1021/jp811100r
- J. AM. CHEM. SOC. vol. 132, 2010, pages 11828 - 11829, XP055195732

## Description

### TECHNICAL FIELD

The present invention relates to a photosemiconductor electrode, a photoelectrochemical cell including the photosemiconductor electrode, and an energy system including the photoelectrochemical cell.

### BACKGROUND ART

It is conventionally reported that electrons and holes generated by irradiation of a semiconductor material serving as a photosemiconductor with light contribute to water splitting and decomposition of organic substances (see, for example, Patent Literature 1).

Patent Literature 1 discloses that an n-type semiconductor electrode and a counter electrode are disposed in an electrolyte and the surface of the n-type semiconductor electrode is irradiated with light to split water and produce hydrogen and oxygen from the surfaces of these electrodes. Specifically, Patent Literature 1 describes the use of a TiO₂ electrode, a ZnO electrode, a CdS electrode, or the like, as the n-type semiconductor electrode.

However, the technique described in Patent Literature 1 has a drawback of a low quantum efficiency of the water splitting reaction by irradiation with light. This drawback comes from the fact that electrons and holes generated by photoexcitation are likely to be recombined and disappear before being used for the water splitting reaction.

So, various techniques have been proposed to improve the function of charge separation between holes and electrons generated by photoexcitation. There is proposed, as a photocatalytic thin film that exhibits high photocatalytic performance under natural light, a gradient film obtained by implanting ions of at least one metal from Nb, V and Cr into a photocatalytic thin film formed on a base so as to change the band gap or the potential gradient in the thickness direction of the film (see Patent Literature 2).

There is also proposed a technique for producing hydrogen by immersing, into a solution containing hydrogen sulfide, a multilayer thin film photocatalyst composed of a stack of a conductive substrate, a first compound semiconductor layer, and a second compound semiconductor layer having a band gap different from that of the first compound semiconductor layer and then irradiating the multilayer thin film photocatalyst with light (see Patent Literature 3).

There is also proposed a photosemiconductor electrode in which a semiconductor film having a photocatalytic function and a semiconductor film having a charge separation function are joined together to form an ohmic junction therebetween and thus to achieve a high quantum efficiency (see Patent Literature 4).

Non-Patent Literature 1 proposes, as another technique for increasing the quantum efficiency of a photosemiconductor electrode, the use of a photocatalyst layer on which iridium oxide as a co-catalyst is supported so as to enhance the photocatalytic performance of the photosemiconductor electrode. Non-Patent Literature 1 reports that a tantalum nitride (Ta₃N₅) photosemiconductor electrode on which iridium oxide is supported by photoelectrodeposition produces a higher photocurrent than a tantalum nitride photosemiconductor electrode on which iridium oxide is not supported, when irradiated with light.

### CITATION LIST

### Patent Literature

Patent Literature 1: JP 51(1976)-123779 A
Patent Literature 2: JP 2002-143688 A
Patent Literature 3: JP 2003-154272 A
Patent Literature 4: WO 2010/050226 A1

### Non-Patent Literature

Non-Patent Literature 1: D. Yokoyama et al., Thin Solid Films, vol. 519 (2011), p. 2087-2092

K. Maeda et al., JOURNAL OF THE AMERICAN CHEMICAL SOCIETY, vol. 133, no. 32, pages 12334-12337 discloses SrNbO₂N catalyzed with IrO₂ as a water-splitting photoanode with a wide visible-light absorption band.

### SUMMARY OF INVENTION

### Technical Problem

According to the techniques described in Patent Literatures 2 to 4, ion implantation into a photosemiconductor layer or formation of a multilayer photosemiconductor layer is used to obtain a configuration in which excited electrons and holes generated in the photosemiconductor layer are easily charge-separated. This configuration reduces recombination of holes and electrons, and as a result, improves the photocatalytic performance. Non-Patent Literature 1 also reports that iridium oxide is effective as a co-catalyst for water oxidation reaction.

However, even these photosemiconductor electrodes require further improvement in order to improve the water splitting reaction activity of photosemiconductors.

It is therefore an object of the present invention to provide a photosemiconductor electrode that exhibits higher photocatalytic activity for water splitting reaction.

### Solution to Problem

A photosemiconductor electrode of the present invention is defined in claim 1.

### Advantageous Effects of Invention

According to the present invention, it is possible to provide a photosemiconductor electrode that exhibits high photocatalytic activity for water splitting reaction.

### BRIEF DESCRIPTION OF DRAWINGS

FIG. 1 is a conceptual diagram showing the band structures of a conductor, a photosemiconductor, and a co-catalyst, before being joined together, as components of a photosemiconductor electrode, in which the Fermi level of the co-catalyst is more negative than that of the photosemiconductor with respect to the vacuum level.
FIG. 2 is a conceptual diagram showing the band structures of a conductor, a photosemiconductor, and a co-catalyst, after being joined together, as components of a photosemiconductor electrode, in which the Fermi level of the co-catalyst is more negative than that of the photosemiconductor with respect to the vacuum level.
FIG. 3 is a conceptual diagram showing the band structures of a conductor, a photosemiconductor, and a co-catalyst, before being joined together, as components of a photosemiconductor electrode, in which the Fermi level of the co-catalyst is more positive than that of the photosemiconductor with respect to the vacuum level.
FIG. 4 is a conceptual diagram showing the band structures of a conductor, a photosemiconductor, and a co-catalyst, after being joined together, as components of a photosemiconductor electrode, in which the Fermi level of the co-catalyst is more positive than that of the photosemiconductor with respect to the vacuum level.
FIG. 5 is a conceptual diagram showing the band structures of a co-catalyst, a photosemiconductor, a semiconductor in a second semiconductor layer, and a conductor, before being joined together, in a photosemiconductor electrode according to the seventh aspect of the present invention further including the second semiconductor layer.
FIG. 6 is a conceptual diagram showing the band structures of the co-catalyst, the photosemiconductor, the semiconductor in the second semiconductor layer, and the conductor, after being joined together, in the photosemiconductor electrode according to the seventh aspect of the present invention further including the second semiconductor layer.
FIG. 7 is a schematic diagram showing the configuration of a photosemiconductor electrode of a first embodiment of the present invention.
FIG. 8 is a schematic diagram showing the configuration of a photoelectrochemical cell of a second embodiment of the present invention.
FIG. 9 is a schematic diagram showing the operation of the photoelectrochemical cell of the second embodiment of the present invention.
FIG. 10 is a schematic diagram showing the configuration of a photoelectrochemical cell of a third embodiment of the present invention.
FIG. 11 is a schematic diagram showing the configuration of an energy system of the fourth embodiment of the present invention.
FIG. 12 is a schematic diagram of an apparatus for synthesizing a single-phase NbON film (MOCVD apparatus) used in Examples of the present invention.
FIG. 13 is a graph showing the absorbance of a colloidal solution containing iridium oxide (IrO₂) used in Examples of the present invention, the absorbance being measured using a spectrophotometer.
FIG. 14 is a graph showing the relationship between the wavelength of irradiated light and the generated photocurrent, the relationship being obtained by measurement of the photocurrent in a photosemiconductor electrode in Example of the present invention.

### DESCRIPTION OF EMBODIMENTS

Focusing on the technique for enhancing the photocatalytic performance of a photosemiconductor electrode using iridium oxide as a co-catalyst, which is described in Background Art, the present inventors have conducted intensive studies on the band bending at the junction between a co-catalyst and a photosemiconductor, which has not been studied.

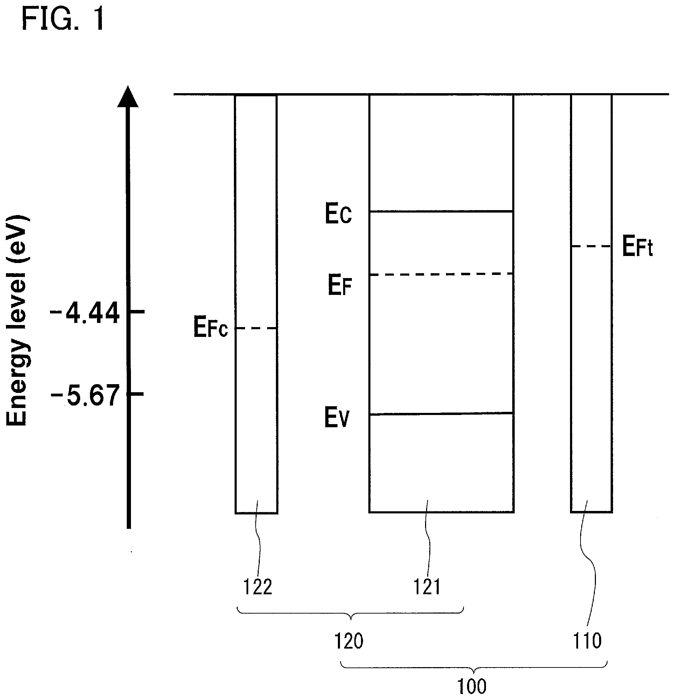

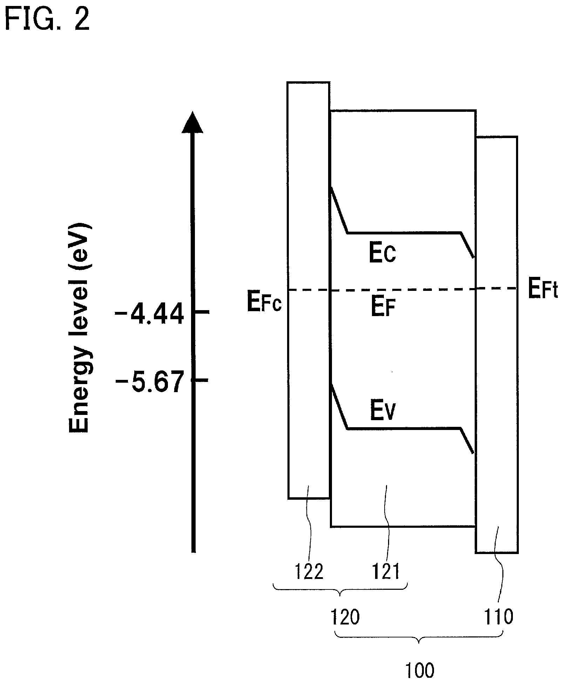

FIG. 1 shows the band structures of a conductor 110, a photosemiconductor 121, and an iridium oxide 122 in a photosemiconductor electrode 100 including the conductor 110 and a photosemiconductor layer 120 disposed thereon and including the photosemiconductor 121 and the iridium oxide 122, in which the Fermi level (E_{Fc}) of the iridium oxide 122 is more negative than the Fermi level (E_{F}) of the photosemiconductor 121 with respect to the vacuum level. FIG. 2 shows the band bending when the photosemiconductor 121, the iridium oxide 122, and the conductor 110 shown in FIG. 1 are joined together. In this case, the iridium oxide 122 and the photosemiconductor 121 form a Schottky junction at the interface therebetween. Therefore, electrons generated in the photosemiconductor 121 move toward the conductor 110 along the band bending. On the other hand, holes generated in the photosemiconductor 121 can move smoothly toward the iridium oxide 122 as a co-catalyst along the band bending. As a result, good charge separation is achieved, which allows the iridium oxide 122 to exhibit a function as a co-catalyst of enhancing the photocatalytic performance of the photosemiconductor 121, for example, a function of activating water oxidation reaction by holes, sufficiently.

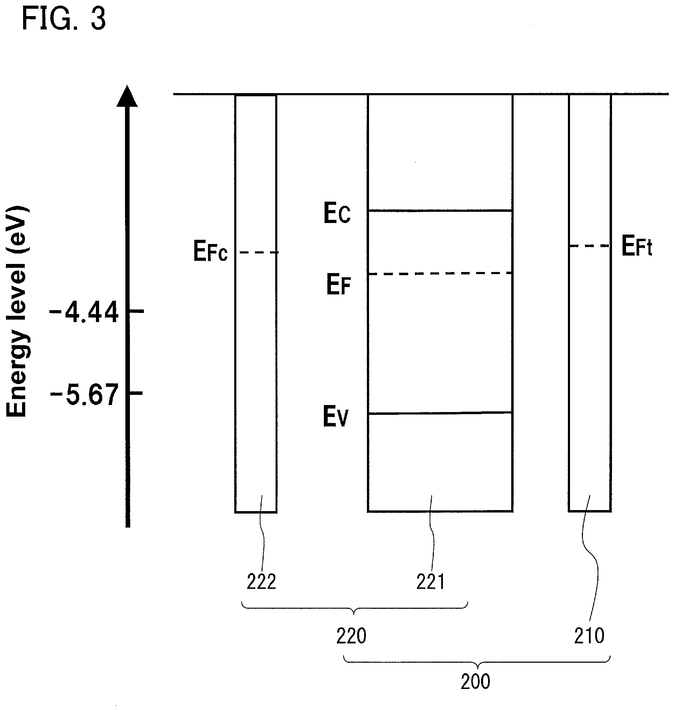

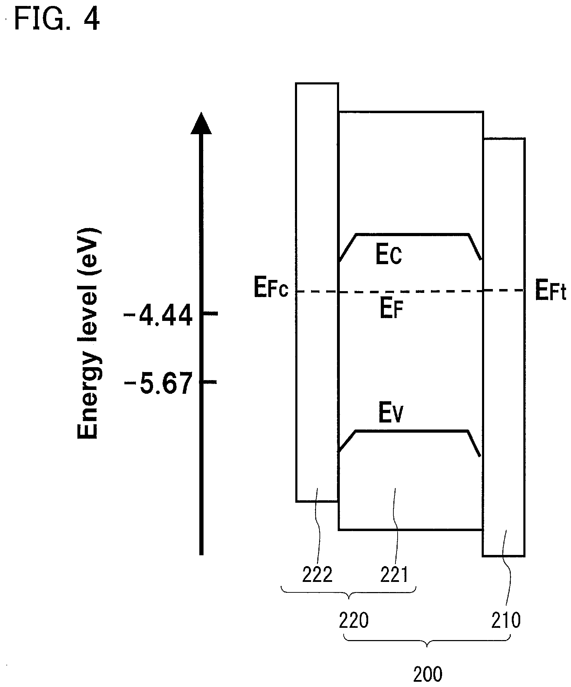

Next, a photosemiconductor electrode 200 shown in FIG. 3, in which the relationship between the Fermi level of an iridium oxide and that of a photosemiconductor is reversed from that in the photosemiconductor electrode 100, is studied. The photosemiconductor electrode 200 includes a conductor 210 and a photosemiconductor layer 220 disposed thereon and including a photosemiconductor 221 and an iridium oxide 222. As shown in FIG. 3, the Fermi level (E_{Fc}) of the iridium oxide 222 is more positive than the Fermi level (EF) of the photosemiconductor 221 with respect to the vacuum level. FIG. 4 shows the band bending when the photosemiconductor 221, the iridium oxide 222, and the conductor 210 shown in FIG. 3 are joined together. In this case, the iridium oxide 210 and the photosemiconductor 220 form an ohmic junction at the interface therebetween. Therefore, excited electrons can move both toward the iridium oxide 222 as a co-catalyst and toward the conductor 210. On the other hand, since holes have difficulty moving toward the iridium oxide 222 as a co-catalyst, they are accumulated at the junction interface and are recombined with electrons, which probably inhibits the progress of the reaction.

The present inventors have made further studies on ordinary iridium oxide. The studies reveal that since the Fermi level of ordinary iridium oxide is -4.26 eV with respect to the vacuum level, this iridium oxide cannot be expected to have the co-catalytic effect on photosemiconductors whose Fermi levels are more negative than -4.26 eV. Some of the photosemiconductor materials that can suitably used for the technique of splitting water to generate hydrogen, such as photosemiconductors that can absorb visible light, have Fermi levels lower than -4.26 eV with respect to the vacuum level. So the present inventors have also found it important to create an iridium oxide whose Fermi level is more negative than that of ordinary iridium oxide with respect to the vacuum level and thus which can also act as a co-catalyst on photosemiconductors whose Fermi levels are lower than -4.26 eV, in order to enhance the photocatalytic performance of photosemiconductor electrodes.

Based on the findings obtained as a result of their intensive studies, the present inventors have provided a photosemiconductor electrode of the present invention with improved photocatalytic performance as described below. The present inventors have also provided a photoelectrochemical cell and an energy system each including the photosemiconductor electrode of the present invention.

A first aspect of the present invention provides a photosemiconductor electrode including: a conductor; and a first semiconductor layer provided on the conductor, wherein the first semiconductor layer includes a photosemiconductor and iridium oxide, and a Fermi level of the iridium oxide is more negative than a Fermi level of the photosemiconductor and is more negative than -4.44 eV, with respect to a vacuum level.

The first semiconductor layer of the photosemiconductor electrode according to the first aspect includes a photosemiconductor and iridium oxide. Since the iridium oxide acts as a co-catalyst for water oxidation reaction, the water splitting reaction activity of the photosemiconductor is improved. Furthermore, since the Fermi level of the iridium oxide is more negative than the Fermi level of the photosemiconductor (the Fermi level of the photosemiconductor and the Fermi level of the iridium oxide satisfy the relationship shown in FIG. 1), it is possible to create the band bending at the junction between the photosemiconductor and the iridium oxide, as shown in FIG. 2, in which charge separation is easily achieved. As a result, recombination of holes and electrons in the first semiconductor layer is reduced and thus the quantum efficiency of the photosemiconductor electrode can be improved.

Furthermore, the iridium oxide contained in the photosemiconductor electrode according to the first aspect has a Fermi level more negative than -4.44 eV with respect to the vacuum level. In order to use a photosemiconductor for water splitting, if it is an n-type semiconductor, its conduction band level must be more positive than the water reduction potential (i.e., -4.44 eV with respect to the vacuum level) and its valence band level must be more negative than the water oxidation potential (i.e., -5.67 eV with respect to the vacuum level). In water splitting using a photosemiconductor as an n-type semiconductor, an n-type semiconductor having the conduction band level and the valence band level as described above is used. Presumably, the Fermi level of such an n-type semiconductor is slightly more negative than the conduction band level. This means that in order to provide a configuration in which an iridium oxide is used as a co-catalyst for photocatalytic activity of an n-type semiconductor capable of splitting water so as to achieve better charge separation when the iridium-containing oxide is joined with the n-type semiconductor, the Fermi level of the iridium oxide needs to be more negative than the water reduction potential (-4.44 eV with respect to the vacuum level). Accordingly, the iridium oxide contained in the photosemiconductor electrode according to the first aspect can act as a co-catalyst on known n-type semiconductors that can be used for water splitting.

For the reasons as described above, the photosemiconductor electrode according to the first aspect can exhibit high photocatalytic activity for water splitting reaction and, as a result, a high quantum efficiency can be achieved.

A second aspect of the present invention provides that the photosemiconductor is an n-type semiconductor composed of NbON or Nb₃N₅.

It should be noted that compared to the Fermi level of conventional iridium oxide, the Fermi level of the oxide iridium element is even more negative than the Fermi level of a photosemiconductor containing at least one or more of the above-mentioned elements, with respect to the vacuum level. Therefore, in the photosemiconductor electrode according to the second aspect, the energy difference between the Fermi level of the photosemiconductor and the Fermi level of the oxide containing iridium element is greater, and thus the band bending is steeper at the junction between them. As a result, smoother charge separation takes place and thus the quantum efficiency is improved.

Under the effect of the p orbitals of nitrogen, the upper edge of the valence band of an oxynitride or a nitride is shifted more positive than that of an oxide with respect to the vacuum level. Therefore, the band gap of an oxynitride or nitride semiconductor is smaller than that of an oxide semiconductor. Among these semiconductors, the band gap of an oxynitride or nitride semiconductor containing niobium element is even smaller because the lower edge of its conduction band is composed of d orbitals of niobium and is closer to the water reduction potential (-4.44 eV with respect to the vacuum level) than that of an oxynitride or a nitride containing an element other than niobium. Therefore, an oxynitride or a nitride containing niobium element is a highly visible-light responsive semiconductor. For example, it is known that a niobium oxynitride (NbON) can absorb light with a wavelength of 600 nm or less, and a niobium nitride (Nb₃N₅) can absorb light with a wavelength of 780 nm or less. Since the photosemiconductor electrode according to the third aspect contains, as a photosemiconductor, at least one n-type semiconductor selected from the group consisting of an oxynitride containing niobium element and a nitride containing niobium element, it is a highly visible-light responsive photosemiconductor electrode.

A third aspect of the present invention provides that the iridium oxide in the first semiconductor layer has a surface density of more than 0 and 2.00 µgcm⁻² or less.

In the photosemiconductor electrode, the iridium oxide has a surface density of more than 0 and 2.00 µgcm⁻² or less. Therefore, the iridium oxide can exhibit its co-catalytic function efficiently. Thus, according to the present invention, it is possible to provide a photosemiconductor electrode with improved water splitting reaction activity while minimizing the cost increase due to the addition of the oxide containing iridium element.

A fourth aspect of the present invention provides that the first semiconductor layer includes a photosemiconductor film containing the photosemiconductor and the iridium oxide, the iridium oxide being supported on a surface of the photosemiconductor film.

In the photosemiconductor electrode, the photosemiconductor is formed in the form of a film in the first semiconductor layer and the iridium oxide is supported on the surface of the film. Therefore, the charge separation of the photoexcited photosemiconductor takes place efficiently. Thus, according to the present invention, it is possible to provide a photosemiconductor electrode in which a high quantum efficiency can be achieved.

A variant of the present invention provides the photosemiconductor electrode according to the present invention , wherein the first semiconductor layer contains the iridium oxide in the form of nanoparticles, and the nanoparticles have a primary particle diameter of 100 nm or less.

As the particle diameter of the iridium oxide decreases, the surface area of the particles increases and thus the reaction field thereof increases. According to this variant, the first semiconductor layer contains the iridium oxide in the form of nanoparticles having a primary particle diameter of 100 nm or less. Therefore, it is possible to provide a photosemiconductor electrode with more improved water splitting reaction activity. As used herein, the primary particle diameter refers to the primary particle diameter obtained by observing particles with a transmission electron microscope (TEM).

A variant of the present invention provides the photosemiconductor electrode according to the present invention, further including a second semiconductor layer disposed between the conductor and the first semiconductor layer, the second semiconductor layer containing a semiconductor different from the photosemiconductor, wherein with respect to the vacuum level, (i) a conduction band edge level and a valence band edge level of the photosemiconductor in the first semiconductor layer are equal to or higher than a conduction band edge level and a valence band edge level of the semiconductor in the second semiconductor layer, respectively, (ii) a Fermi level of the semiconductor in the second semiconductor layer is higher than a Fermi level of the photosemiconductor in the first semiconductor layer, and (iii) a Fermi level of the conductor is higher than the Fermi level of the semiconductor in the second semiconductor layer.

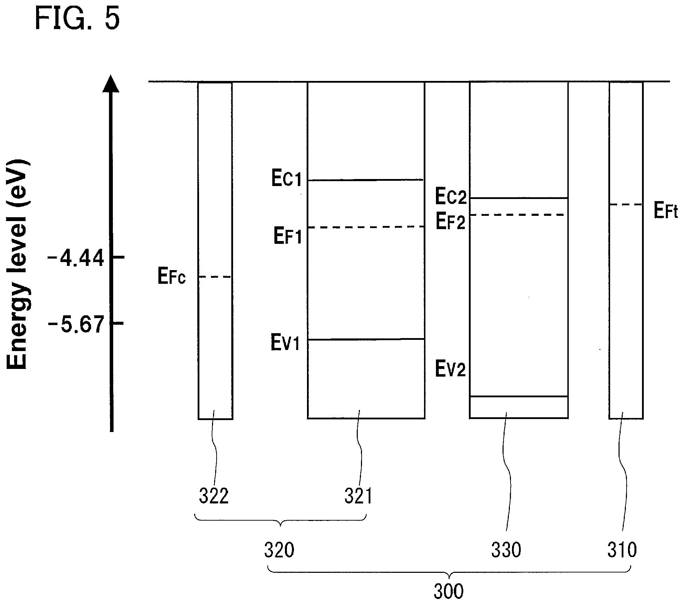

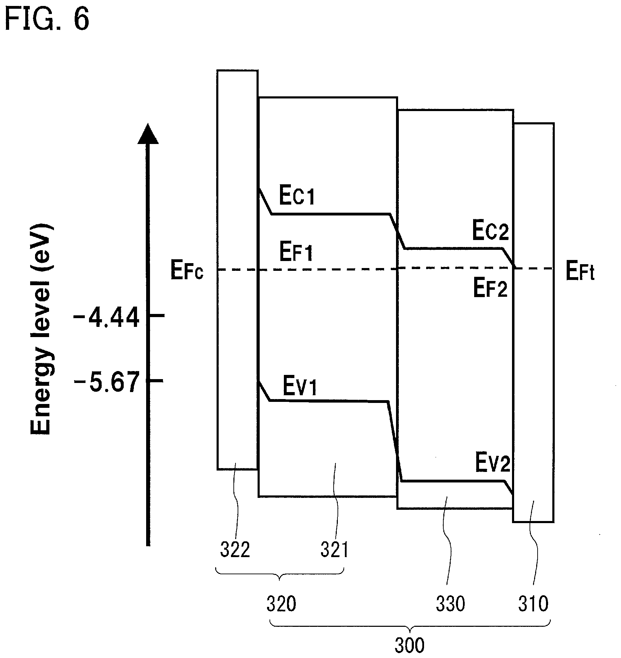

In the photosemiconductor electrode according to this variant, the relationship between the conduction band edge level, the valence band edge level, and the Fermi level of the photosemiconductor in the first semiconductor layer and those of the semiconductor in the second semiconductor layer and further the relationship between the Fermi level of the conductor and that of the semiconductor in the second semiconductor layer are, for example, as shown in FIG. 5 and FIG. 6. FIG. 5 shows, as an example, a photosemiconductor electrode 300 including a conductor 310, a first semiconductor layer 320, and a second semiconductor layer 330 disposed between the conductor 310 and the first semiconductor layer 320. The first semiconductor layer 320 includes a photosemiconductor 321 and iridium oxide 322. In the photosemiconductor electrode 300, the Fermi level (E_{Fc}) of the iridium oxide 322 is more negative than the Fermi level (E_{F1}) of the photosemiconductor 321 with respect to the vacuum level. Furthermore, (i) the conduction band edge level (E_{C1}) and the valence band edge level (Evi) of the photosemiconductor 321 in the first semiconductor layer 320 are equal to or higher than the conduction band edge level (E_{C2}) and the valence band edge level (E_{V2}) of the semiconductor in the second semiconductor layer 330, respectively, (ii) the Fermi level (E_{F2}) of the semiconductor in the second semiconductor layer 330 is higher than the Fermi level (E_{F1}) of the photosemiconductor 321 in the first semiconductor layer 320, and (iii) the Fermi level (E_{Ft}) of the conductor 310 is higher than the Fermi level (E_{F2}) of the semiconductor in the second semiconductor layer 330. FIG. 6 shows the band bending when the iridium oxide 322, the photosemiconductor 321, the semiconductor in the second semiconductor layer 330, and the conductor 310 shown in FIG. 5 are joined together. In this case, the iridium oxide 322 and the photosemiconductor 321 forms a Schottky junction at the interface therebetween. Furthermore, the photosemiconductor 321 and the semiconductor in the second semiconductor layer 330 form an ohmic junction, and the semiconductor in the second semiconductor layer 330 and the conductor 310 form an ohmic junction. Therefore, electrons generated in the photosemiconductor 321 move smoothly toward the conductor 310 along the band bending. On the other hand, holes generated in the photosemiconductor 321 can move smoothly toward the iridium oxide 322 as a co-catalyst along the band bending.

As described above, in the photosemiconductor electrode according to the this variant, the second semiconductor layer as a charge separation film is provided between the first semiconductor layer and the conductor so as to form ohmic junctions with the first semiconductor layer and with the conductor. Thus, according to the variant, electrons generated in the first semiconductor layer are charge-separated smoothly, which makes it possible to provide a photosemiconductor electrode in which a high quantum efficiency can be achieved.

An variant of the present invention provides a photoelectrochemical cell including: the photosemiconductor electrode according to the invention; a counter electrode connected electrically to the conductor in the photosemiconductor electrode; and a container containing the photosemiconductor electrode and the counter electrode.

Since the photoelectrochemical cell according to this variant includes the photosemiconductor electrode according to the invention, electrons and holes generated by photoexcitation are charge-separated efficiently and thus the light utilization efficiency can be improved.

A variant of the present invention provides the photoelectrochemical cell according to the above variant, further including a water-containing electrolyte in contact with a surface of the photosemiconductor electrode and a surface of the counter electrode in the container.

According to the photoelectrochemical cell according to this variant, it is possible to produce hydrogen via water splitting.

A variant of the present invention provides an energy system including: the photoelectrochemical cell according to the above variant; a hydrogen storage that is connected to the photoelectrochemical cell by a first pipe and that stores hydrogen generated in the photoelectrochemical cell; storage fuel cell that is connected to the hydrogen storage by a second pipe and that converts the hydrogen stored in the hydrogen storage into electricity.

Since the energy system according to this variant includes a photoelectrochemical cell using the photosemiconductor electrode according to the present invention, the light utilization efficiency can be improved.

Hereinafter, the embodiments of the present invention are described in detail with reference to the drawings. The following embodiments are merely exemplary, and the present invention is not limited to these embodiments. In the following embodiments, the same parts are provided with the same numerals, and the same description may be omitted.

### (First Embodiment)

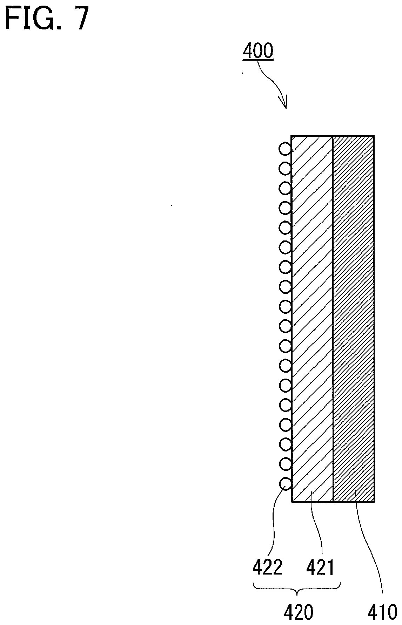

FIG. 7 shows an embodiment of the photosemiconductor electrode of the present invention. An photosemiconductor electrode 400 of the present embodiment includes a conductor 410 and a photosemiconductor layer (first semiconductor layer) 420 provided on the conductor 410. The photosemiconductor layer 420 includes a photosemiconductor film 421 containing a photosemiconductor and iridium oxide 422 in the form of nanoparticles supported on the surface of the photosemiconductor film 421. The Fermi level of the iridium oxide 422 is more negative than the Fermi level of the photosemiconductor film 421 and is more negative than -4.44 eV with respect to the vacuum level.

As the conductor 410, a metal substrate may be used, or a substrate having a surface on which a conductive film is provided may be used. For example, metals such as Ti, Ni, Ta, Nb, Al, and Ag, or electrically conductive materials such as ITO (Indium Tin Oxide) and FTO (Fluorine-doped Tin Oxide) can be used for the metal substrate or the conductive film. It is preferable that the area in the surface of the conductor 410 that is not covered by the photosemiconductor film 421 be covered by an insulating material such as a resin. Such a configuration can prevent the conductor 410 from dissolving in an electrolyte when the photosemiconductor electrode 400 is placed in the electrolyte.

As the photosemiconductor contained in the photosemiconductor film 421, a semiconductor that can act as an effective photocatalyst for water splitting and that satisfies the above-described relationship between its Fermi level and the Fermi level of the iridium oxide 422 can be used and is not particularly limited. Examples of such an n-type semiconductor include a niobium oxynitride (NbON) Among these, an n-type semiconductor composed of at least one selected from the group consisting of NbON and Nb₃N₅ is suitably used. An oxynitride or a nitride containing niobium element is a highly visible-light responsive semiconductor. For example, a niobium oxynitride (NbON) can absorb light with a wavelength of 600 nm or less, and a niobium nitride (Nb₃N₅) can absorb light with a wavelength of 780 nm or less. Therefore, the photosemiconductor electrode 400 having high visible light responsiveness can be obtained. It is only necessary that the photosemiconductor film 421 contain the photosemiconductor, and the photosemiconductor film 421 desirably contains, for example, 90 mass% or more of the photosemiconductor. The photosemiconductor film 421 may consist essentially of the photosemiconductor (the photosemiconductor film 421 may contain other components such as unavoidable impurities, for example, in an amount of 5 mass% or less, and preferably 1 mass% or less), and may consist of the photosemiconductor.

The greater the thickness of the photosemiconductor film 421 is, the more the photosemiconductor film 421 can absorb light. However, the greater the thickness of the photosemiconductor film 421 is, the more likely electrons generated by photoexcitation in the photosemiconductor film 421 are recombined with holes before reaching the conductor 410. Therefore, the thickness of the photosemiconductor film 421 is desirably 100 nm to 20 µm. It is desirable to select the optimum thickness of the photosemiconductor film 421 from the above range because the optimum thickness is believed to depend on the photosemiconductor material used, crystal defects, etc.

It is desirable that the iridium oxide 422 to be supported on the surface of the photosemiconductor film 421 contain IrO₂ that exhibits high catalytic activity for water oxidation reaction, and it is more desirable that the content of IrO₂ be higher. The iridium oxide 422 consists of IrO₂.

The primary particle diameter of the supported iridium oxide 422 is desirably 100 nm or less, and more desirably 10 nm or less. This is because as the particle diameter decreases, the surface area of the particles increases and thus the reaction field thereof increases.

The photosemiconductor electrode 400 of the present embodiment can be produced by the following method, for example.

First, the conductor 410 is prepared, and then a photosemiconductor material is deposited on the conductor 410 by a known deposition technique such as MOCVD or sputtering so as to form the photosemiconductor film 421 on the conductor 410.

Next, the iridium oxide 422 is supported on the photosemiconductor film 421 to prepare an iridium oxide-supported film. As the iridium source, for example, Na₂IrCl₆•6H₂O, H₂IrCl₆•nH₂O, (NH₄)₂IrCl₆, or the like can be used. The pH of this iridium source is adjusted with an aqueous sodium hydroxide solution or nitric acid so as to prepare a colloidal solution containing iridium oxide. In order to support iridium oxide onto the photosemiconductor film 421 by using this colloidal solution, various known techniques such as dip coating, application, and immersion can be used. It is desirable to use immersion, among these techniques, to support an adequate amount of iridium oxide and to precisely control the amount of iridium oxide supported. In this case, the amount of the supported iridium oxide varies depending on the concentration of the colloidal solution and the immersion time. The concentration of the colloidal solution can be, for example, 0.01 to 0.5 gL⁻¹.

The immersion time can be, for example, about 5 minutes to 24 hours. It is possible to determine the amount of the supported iridium oxide by immersing the conductor 410 and the photosemiconductor film 421 formed thereon in the colloidal solution containing iridium oxide and measuring the difference in the amount of iridium contained in the colloidal solution before and after the immersion by, for example, ICP emission spectroscopy.

Next, heat treatment is performed if necessary so as to immobilize the iridium oxide in the form of nanoparticles on the photosemiconductor film 421. The temperature of the heat treatment is, for example 400°C or lower, and desirably 100 to 200°C.

Next, the iridium oxide 422 thus supported in the form of nanoparticles on the photosemiconductor film 421 is annealed in an inert atmosphere (e.g., a nitrogen atmosphere). The iridium oxide whose Fermi level is more negative than -4.44 eV with respect to the vacuum level can be obtained by this annealing treatment. The iridium oxide nanoparticles that are supported on the photosemiconductor film 421 are subjected to this annealing in an inert atmosphere so as to reduce the defects on the surface of the nanoparticles. Thereby, the iridium oxide whose Fermi level is more negative than -4.44 eV with respect to the vacuum level can be obtained. Thus, the use of the iridium oxide whose Fermi level is more negative than -4.44 eV with respect to the vacuum level makes it possible to obtain the photosemiconductor electrode 400 in which the iridium oxide acts effectively as a co-catalyst on known n-type photosemiconductors that can be used for water splitting.

The band structures of the conductor 410, the photosemiconductor film 421, and the iridium oxide 422, before being joined together, in the photosemiconductor electrode 400 of the present embodiment are the same as those shown in FIG. 1. The band bending when the conductor 410, the photosemiconductor 421, and the iridium oxide 422 are joined together is the same as that shown in FIG. 2. Therefore, in the photosemiconductor electrode 400, the band bending, in which charge separation is easily achieved, is created at the junction between the photosemiconductor 421 and the iridium oxide 422, as described above. As a result, in the photosemiconductor electrode 400, recombination of holes and electrons is reduced in the photosemiconductor layer 420, resulting in a high quantum efficiency.

Furthermore, the iridium oxide contained in the photosemiconductor electrode 400 has a Fermi level more negative than -4.44 eV with respect to the vacuum level. In order to use a photosemiconductor for water splitting, if it is an n-type semiconductor, its conduction band level must be more positive than the water reduction potential (i.e., -4.44 eV with respect to the vacuum level) and its valence band level must be more negative than the water oxidation potential (i.e., -5.67 eV with respect to the vacuum level). In water splitting using a photosemiconductor as an n-type semiconductor, an n-type semiconductor having the conduction band level and the valence band level as described above is used. Presumably, the Fermi level of such an n-type semiconductor is slightly more negative than the conduction band level. This means that in order to provide a configuration in which an iridium oxide is used as a co-catalyst for photocatalytic activity of an n-type semiconductor capable of splitting water so as to achieve better charge separation when the iridium oxide is joined with the n-type semiconductor, the Fermi level of the iridium oxide needs to be more negative than the water reduction potential (-4.44 eV with respect to the vacuum level). Accordingly, the iridium oxide 421 contained in the photosemiconductor electrode 400 can act as a co-catalyst on known n-type semiconductors that can be used for water splitting.

The photosemiconductor electrode 400 of the present embodiment may further include another semiconductor layer (second semiconductor layer) disposed between the conductor 410 and the photosemiconductor layer 420. It is desirable that the further included semiconductor layer be a layer that forms ohmic junctions with the photosemiconductor layer 420 and with the conductor 410, respectively, and thus can act as a charge separation film, that is, a layer that has the band structures shown in FIG. 5 and FIG. 6. With this configuration, it is possible to achieve a high quantum efficiency.

In the present embodiment, a photosemiconductor electrode having a configuration in which a photosemiconductor in the form of a film is provided on a conductor and iridium oxide is supported on the surface of the film is described as an example. However, the configuration of the photosemiconductor electrode of the present invention is not limited to this configuration. The photosemiconductor electrode of the present invention may have a configuration in which as a single semiconductor layer (first semiconductor layer), a mixture of a photosemiconductor and iridium oxide, is provided on a conductor. Even if a mixture of a photosemiconductor and an iridium oxide is used, holes and electrons can move across the iridium oxide, the photosemiconductor, and the conductor if they are firmly joined together. Therefore, it is possible to obtain the band bending as shown in FIG. 2. As a result, the same effect, that is, the effect of reducing recombination of holes and electrons in the first semiconductor layer and thus achieving a high quantum efficiency can be obtained. However, in this configuration, the electron travel distance is long and the conduction paths are limited. Therefore, electrons are more likely to be recombined with holes as they move in this configuration than in a configuration in which a photosemiconductor in the form of a film is provided on a conductor and iridium oxide is supported on the surface of the film. Thus, the configuration in which a photosemiconductor in the form of a film is provided on a conductor and iridium oxide is supported on the surface of the film is more preferable.

### (Second Embodiment)

An embodiment of a photoelectrochemical cell including the photosemiconductor electrode of the present invention is described. A photoelectrochemical cell of the present embodiment includes: the photosemiconductor electrode of the present invention; a counter electrode connected electrically to the conductor in the photosemiconductor electrode; an electrolyte in contact with the surface of the photosemiconductor electrode and the surface of the counter electrode; and a container containing the photosemiconductor electrode, the counter electrode, and the electrolyte.

An example of a photoelectrochemical cell including the photosemiconductor electrode 400 described in the first embodiment is described herein.

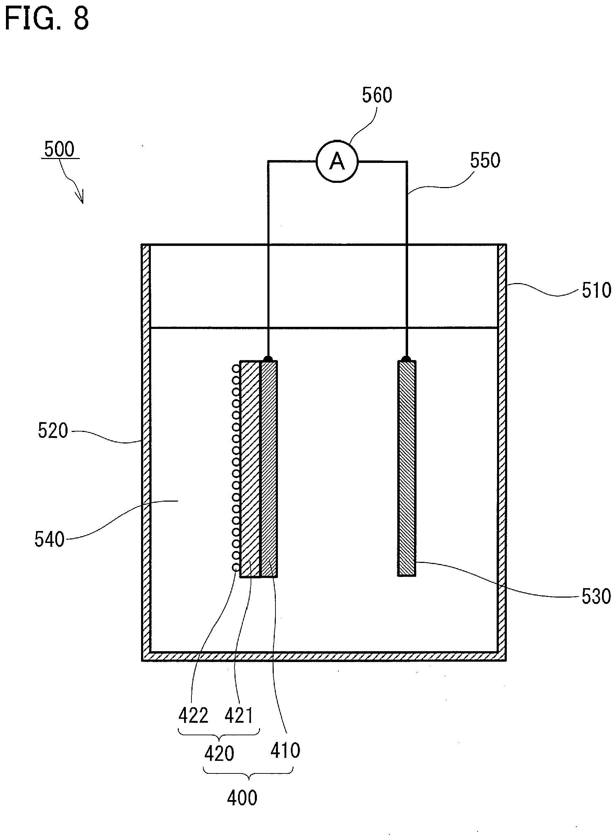

As shown in FIG. 8, a photoelectrochemical cell 500 of the present embodiment includes: the photosemiconductor electrode 400; a counter electrode 530 as an electrode paired with the photosemiconductor electrode 400; a water-containing electrolyte 540; and a container 510 having an opening and containing the photosemiconductor electrode 400, the counter electrode 530, and the electrolyte 540.

In the container 510, the photosemiconductor electrode 400 and the counter electrode 530 are disposed so that the surface of the photosemiconductor layer 420 of the photosemiconductor electrode 400 on which the iridium oxide 422 is supported and the surface of the counter electrode 530 are in contact with the electrolyte 540. The configuration of the photosemiconductor electrode 400 is as described in the first embodiment. A portion of the container 510 that faces the surface of the photosemiconductor electrode 400 on which the iridium oxide 422 is supported in the container 510 (hereinafter simply referred to as a light incident portion 520) is made of a material that transmits light such as sunlight.

The conductor 410 of the photosemiconductor electrode 400 is connected electrically to the counter electrode 530 by a conducting wire 550. As used herein, the counter electrode means an electrode that can give or receive electrons with a photosemiconductor electrode without an electrolyte. Accordingly, in the present embodiment, the positional relationship between the counter electrode 530 and the photosemiconductor electrode 400 is not particularly limited as long as the counter electrode 530 is connected electrically to the conductor 410 as a component of the photosemiconductor electrode 400. Since the photosemiconductor film 421 as a component of the photosemiconductor electrode 400 is an n-type semiconductor, the counter electrode 530 serves as an electrode that receives electrons from the photosemiconductor electrode 400 without the electrolyte 540.

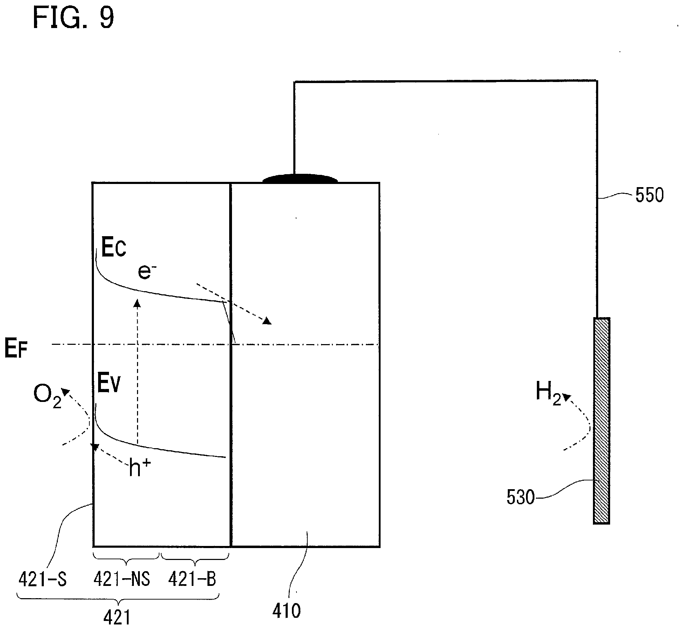

Next, the operation of the photoelectrochemical cell 500 is described also with reference to FIG. 9.

When the photosemiconductor layer 420 of the photosemiconductor electrode 400 disposed in the container 510 is irradiated with sunlight from the light incident portion 520 of the container 510 in the photoelectrochemical cell 500, electrons are generated in the conduction band and holes are generated in the valence band in a portion of the photosemiconductor layer 420 irradiated with light (in the surface near-field region 421-NS of the photosemiconductor film 421 in the present embodiment). As used herein, the surface of the photosemiconductor film 421 refers to the surface on which the iridium oxide 421 is supported. The iridium oxide is supported on the light-irradiated surface of the photosemiconductor film 421, although it is not shown in FIG. 9. Since the photosemiconductor constituting the photosemiconductor film 421 is an n-type semiconductor, the potential of the surface 421-S of the photosemiconductor film 421 is higher than the potential of the inner portion 421-B of the photosemiconductor film 421. Therefore, the holes generated at this time move to the surface 421-S of the photosemiconductor film 421 along the band edge E_{V} of the valence band. Thus, water splitting occurs on the surface of the photosemiconductor film 421 according to the following reaction formula (1), so that oxygen is evolved. On the other hand, the electrons move from the surface near-field region 421-NS of the photosemiconductor film 421 to the conductor 410 through the inner portion 420-B of the photosemiconductor film 421 along the band edge Ec of the conduction band. The electrons that have reached the conductor 410 move toward the counter electrode 530 that is connected electrically to the conductor 410 by the conducting wire 550. Thus, hydrogen is generated on the surface of the counter electrode 530 according to the following reaction formula (2). E_{F} shown in FIG. 9 indicates the Fermi level.

4h⁺+2H₂O → O₂↑+4H⁺ (1)

4e⁻+4H⁺ → 2H₂↑ (2)

As described in the first embodiment, holes and electrons are less likely to be recombined in the photosemiconductor electrode 400. In the photoelectrochemical cell 500 including this photosemiconductor electrode 400, holes and electrons are charge-separated efficiently, which not only enhances the quantum efficiency of the hydrogen evolution reaction by light irradiation but also makes it possible to generate hydrogen and oxygen separately.

It is preferable to use a material with a low overvoltage for the counter electrode 530. For example, it is desirable to use a metal catalyst such as Pt, Au, Ag, Fe, or Ni as the counter electrode. The use of such a metal catalyst makes it possible to further increase the water splitting reaction activity.

Any electrolyte can be used for the electrolyte 540 as long as it is a water-containing electrolyte. The electrolyte 540 may be acidic or alkaline. In the case where a solid electrolyte is disposed between the photosemiconductor electrode 400 and the counter electrode 530, it is possible to replace the electrolyte 540 in contact with the surface of the photosemiconductor electrode 400 and the surface of the counter electrode 530 by pure water for electrolysis.

### (Third Embodiment)

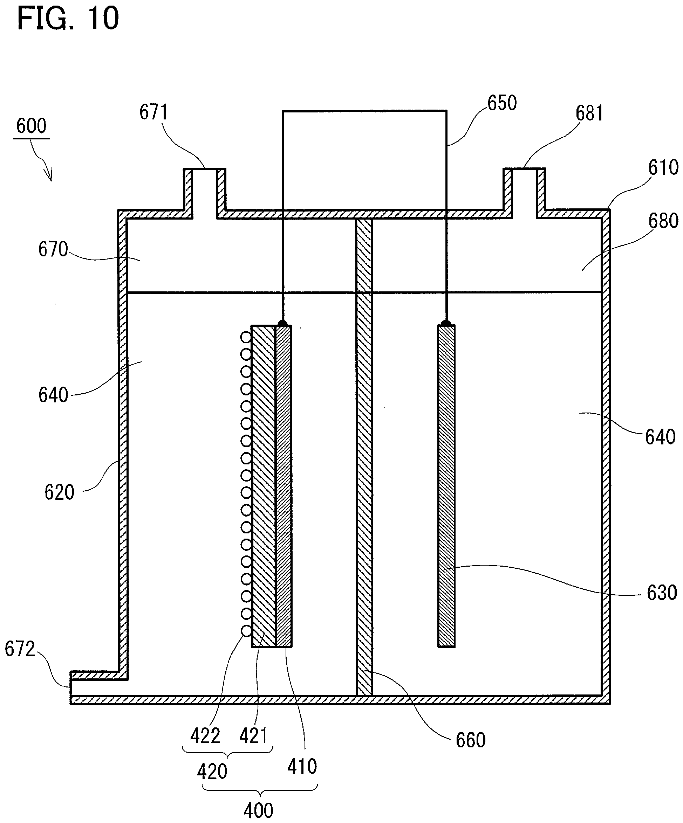

Another embodiment of a photoelectrochemical cell including the photosemiconductor electrode of the present invention is described with reference to FIG. 10. FIG. 10 is a schematic diagram showing the configuration of a photoelectrochemical cell 600 of the present embodiment.

As shown in FIG. 10, the photoelectrochemical cell 600 of the present embodiment includes a housing (container) 610, the semiconductor electrode 400, a counter electrode 630, and a separator 660. The separator 660 divides the interior of the housing 610 into two chambers, a first chamber 670 and a second chamber 680. The first chamber 670 and the second chamber 680 each contain a water-containing electrolyte 640.

The photosemiconductor electrode 400 is disposed at a position in contact with the electrolyte 640 in the first chamber 670. The configuration of the photosemiconductor electrode 400 is as described in the first embodiment. The first chamber 670 is provided with a first gas outlet 671 for discharging oxygen generated in the first chamber 670 and a water inlet 672 for feeding water into the first chamber 670. A portion of the housing 610 that faces the surface of the photosemiconductor layer 420 of the photosemiconductor electrode 400 disposed in the first chamber 670 (hereinafter simply referred to as a light incident portion 620) is made of a material that transmits light such as sunlight.

On the other hand, the counter electrode 630 is disposed at a position in contact with the electrolyte 640 in the second chamber 680. The second chamber 680 is provided with a second gas outlet 681 for discharging hydrogen generated in the second chamber 680.

The conductor 410 of the photosemiconductor electrode 400 and the counter electrode 630 are electrically connected by a conducting wire 650.

The counter electrode 630 and the electrolyte 640 are the same as the counter electrode 530 and the electrolyte 540 respectively in the second embodiment.

The separator 660 is formed of a material that allows the electrolyte 640 to pass through and has a function of blocking gas generated inside each of the first chamber 670 and the second chamber 680. Examples of the material of the separator 660 include a solid electrolyte such as a polymer solid electrolyte. Examples of the polymer solid electrolyte include an ion exchange membrane such as Nafion (registered trademark). With a configuration in which this separator 660 is used to divide the interior space of the container 610 into two areas and the electrolyte 640 and the surface of the photosemiconductor electrode 400 (the surface of the photosemiconductor film 421 on which the iridium oxide 422 is supported) are placed in contact with each other in one of the areas while the electrolyte 640 and the surface of the counter electrode 630 are placed in contact with each other in the other area, oxygen and hydrogen generated in the container 610 can be separated easily.

### (Fourth Embodiment)

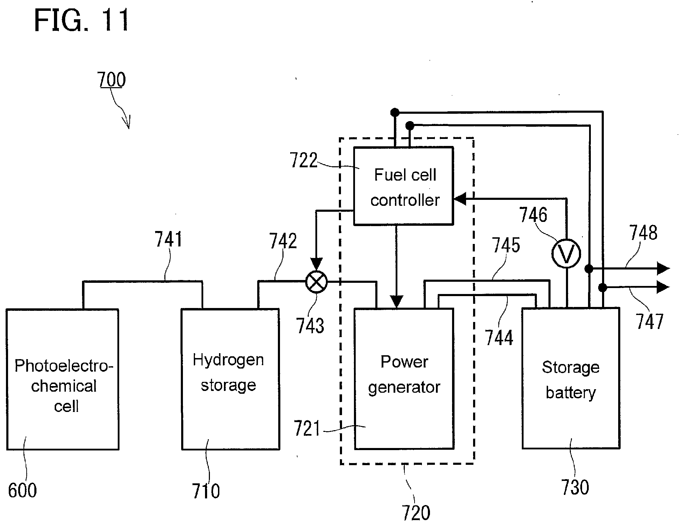

An embodiment of an energy system including the photoelectrochemical cell 600 described in the third embodiment is described with reference to FIG. 11. FIG. 11 is a schematic diagram showing the configuration of an energy system of the present embodiment.

As shown in FIG. 11, an energy system 700 of the present embodiment includes the photoelectrochemical cell 600, a hydrogen storage 710, a fuel cell 720, and a storage battery 730.

The photoelectrochemical cell 600 is the photoelectrochemical cell described in the third embodiment and the specific configuration thereof is as shown in FIG. 10. Therefore, detailed description thereof is omitted here.

The hydrogen storage 710 is connected to the second chamber 680 of the photoelectrochemical cell 600 (see FIG. 10) by a first pipe 741. The hydrogen storage 710 can be composed, for example, of a compressor for compressing the hydrogen generated in the photoelectrochemical cell 600 and a high-pressure hydrogen tank for storing the hydrogen compressed by the compressor.

The fuel cell 720 includes a power generator 721 and a fuel cell controller 722 for controlling the power generator 721. The fuel cell 720 is connected to the hydrogen storage 710 by a second pipe 742. The second pipe 742 is provided with a shutoff valve 743. For example, a solid polymer electrolyte fuel cell can be used as the fuel cell 720.

The positive electrode and the negative electrode of the storage battery 730 respectively are connected electrically to the positive electrode and the negative electrode of the power generator 721 in the fuel cell 720 by a first line 744 and a second line 745. The storage battery 730 is provided with a capacity meter 746 for measuring the remaining capacity of the storage battery 730. For example, a lithium ion battery can be used as the storage battery 730.

Next, the operation of the energy system 700 of the present embodiment is described with reference to FIG. 10 and FIG. 11.

When the surface of the photosemiconductor film 421 of the photosemiconductor electrode 400 disposed in the first chamber 670 is irradiated with sunlight through the light incident portion 620 of the photoelectrochemical cell 600, electrons and holes are generated in the photosemiconductor film 421. The holes thus generated move toward the surface of the photosemiconductor film 421 and many of them further move to the iridium oxide 422. Thus, water splitting occurs on the surface of the iridium oxide 422 and the surface of the photosemiconductor film 421 and oxygen is evolved according to the above reaction formula (1).

On the other hand, the electrons move to the conductor 410 along the bending of the band edge of the conduction band at the interface between the photosemiconductor film 421 and the conductor 410. The electrons that have reached the conductor 410 move toward the counter electrode 630 that is connected electrically to the conductor 410 by a conducting wire 650. Thus, hydrogen is generated on the surface of the counter electrode 630 according to the above reaction formula (2).

Oxygen generated in the first chamber 670 is discharged from the photoelectrochemical cell 600 through the first gas outlet 371. On the other hand, hydrogen generated in the second chamber 680 is supplied into the hydrogen storage 710 through the second gas outlet 681 and the first pipe 641.

In generating power in the fuel cell 720, the shutoff valve 743 is opened according to signals from the fuel cell controller 722, so that the hydrogen stored in the hydrogen storage 710 is supplied to the power generator 721 of the fuel cell 720 through the second pipe 742.

The electricity generated in the power generator 721 of the fuel cell 720 is stored inside the storage battery 730 through the first line 744 and the second line 745. The electricity stored in the storage battery 730 is supplied to homes, offices, etc. through a third line 747 and a fourth line 748.

According to the photoelectrochemical cell 600 in the present embodiment, it is possible to improve the quantum efficiency of the hydrogen evolution reaction by irradiation with light. Thus, the energy system 700 of the present embodiment provided with this photoelectrochemical cell 600 can provide an efficient power supply.

### EXAMPLES

Hereafter, examples of the present invention are described specifically.

### (Synthesis of single-phase NbON film)

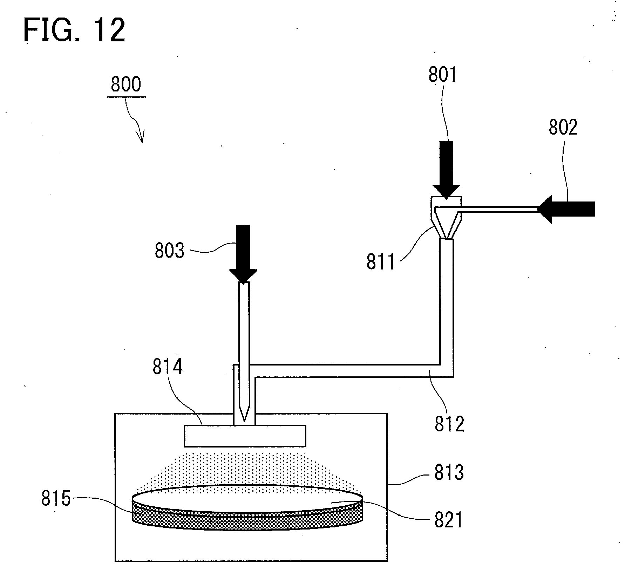

Tertiary butylimino tris(ethylmethylamino) niobium (t-(CH₃)₃CN=Nb(N(CH₃)C₂H₅)₃) was used as the raw material to synthesize a single-phase NbON film in a MOCVD apparatus 800 shown in FIG. 12. An ethylcyclohexane solution of the raw material 801 at 3.38 × 10⁻⁵ Pa•m³/s (0.2 sccm) was vaporized at 150°C in a vaporizer 811. Nitrogen gas 802 was used as an inert gas. Oxygen 803 at 1.69 × 10⁻⁴ Pa•m³/s (1 sccm) was mixed with a mixed gas at 1.69 × 10⁻¹ Pa•m³/s (1000 sccm) containing the source gas (vaporized material 801) and the nitrogen gas 802. The resulting gas mixture was injected for 6 hours from a shower head 814 to a substrate 821 (ITO film (with a thickness of 150 nm) / glass substrate) heated at 300°C by a susceptor 815. Thus, a NbON film with a thickness of 160 nm was obtained.

### (Method for supporting iridium oxide)

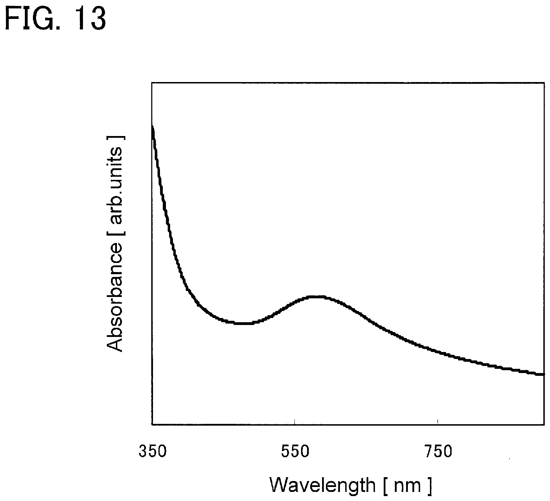

A NbON film / ITO substrate (ITO film (with a thickness of 150 nm) / glass substrate) was placed in a container, and 1.5 mL of a colloidal solution containing iridium oxide (concentration of iridium oxide: 0.0019 to 0.22 gL⁻¹) was poured into the container. It was confirmed using a spectrophotometer (UV-vis) that IrO₂ in the iridium oxide-containing colloidal solution used has an absorption near 580 nm (see FIG. 13). The NbON film / ITO substrate immersed in the solution was allowed to stand still for 3 to 5 hours therein so as to support iridium oxide on the NbON film. Then, heat treatment (annealing) was performed at 200°C for 1 hour in a nitrogen atmosphere, followed by washing with water. Thus, a NbON film / ITO substrate having an iridium oxide-supported surface, that is, a photosemiconductor electrode, was obtained. In the present examples, the concentration and the immersion time were varied to fabricate a plurality of samples of photosemiconductor electrodes (Examples 1 to 5) on which different amounts of iridium oxide were supported.

As a comparative sample, a sample obtained with the immersion time of 0 hour, that is, a sample of a photosemiconductor electrode on which iridium oxide was not supported (Comparative Example 1) was fabricated. Furthermore, another comparative sample (Comparative Example 2) was also fabricated by the following method. First, the pH of the colloidal solution mentioned above was lowered close to neutrality using nitric acid and then the solution was left at ordinary temperature so as to precipitate iridium oxide. Next, the precipitate was filtered out of the solution and fired at 600°C for 3 hours in the atmosphere of a muffle furnace. Thus, iridium oxide powder with a particle diameter of tens of micrometers was obtained. A dispersion obtained by dispersing this powder in a solvent (distilled water) was applied onto the NbON film, followed by heat treatment at 200°C for 1 hour in a nitrogen atmosphere. Thus, the iridium oxide-supported NbON film was obtained.

### (Method for measuring the Fermi level)

The Fermi levels of iridium oxides and the NbON films prepared in the present examples were determined. The Fermi levels were measured by UPS (ultraviolet photoelectron spectroscopy). The iridium oxide for measurement was prepared in the following manner. First, the step of immersing a metal plate in a colloidal solution containing iridium oxide (the same solution as described above) to support iridium oxide on the metal plate was repeated so as to support a sufficient amount of iridium oxide on the metal plate. Then, the iridium oxide supported on the metal plate was subjected to heat treatment at 200°C for 1 hour in a nitrogen atmosphere. The iridium oxide thus prepared was used to measure the Fermi level thereof. As for Comparative Example, the iridium oxide powder was used for the measurement of the Fermi level.

### (ICP emission spectroscopy)

A calibration curve of the emission intensity against the concentration of iridium oxide in the colloidal solution was prepared. The amount of iridium oxide supported on the NbON film / ITO substrate was determined by comparing the amounts of iridium contained in the colloidal solution before and after the supporting of iridium oxide by ICP emission spectroscopy. The same comparison was made for a sapphire substrate (the back surface of an ITO substrate without a NbON film) to accurately determine the amount of iridium oxide supported on the NbON film. Table 1 shows the surface density of iridium oxide in each photosemiconductor electrode sample.

### (Measurement of photocurrent)

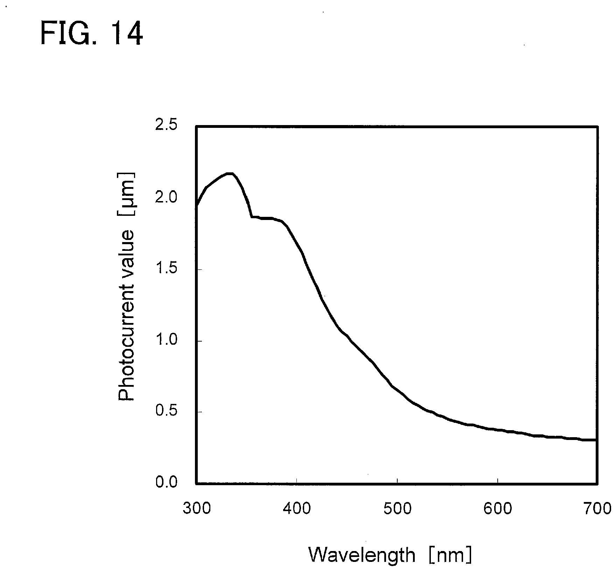

Monochromatic light was obtained from white light emitted from a Xe lamp as a light source by a monochromator, each photosemiconductor electrode sample (electrode area of 1 cm²) set in a photoelectrochemical cell was irradiated with the monochromatic light, and the photocurrent generated at each wavelength was measured. The configuration of the photoelectrochemical cell used herein was the same as that of the photoelectrochemical cell 500 described in the second embodiment. A 0.1 M aqueous solution of sulfuric acid was used as the electrolyte 540. A platinum plate was used as the counter electrode 530. The photosemiconductor electrode and the counter electrode were electrically connected by a copper wire. FIG. 14 shows the results of the photocurrent measurement of a photosemiconductor electrode (comparative sample) on which iridium oxide was not supported. The photocurrent was obtained at wavelengths of 600 nm or less, and the rise of the photocurrent was observed at the same wavelength as the reported absorption wavelength of NbON.

Table 1 also shows the measurement results of the photocurrents observed in all the samples (Examples 1 to 5 and Comparative Examples 1 and 2). The photocurrent values shown in Table 1 are each the integrated value of the value obtained by subtracting the dark current value at 700 nm from the photocurrent value obtained when irradiated with light with a wavelength of 300 to 600 nm. The photocurrent values of the iridium oxide-supported photosemiconductor electrodes of Examples 1 to 5 were much higher than the photocurrent value of the photosemiconductor electrode of Comparative Example 1 on which iridium oxide was not supported. The photocurrent value of the photosemiconductor electrode of Comparative Example 2 was very low because iridium oxide was supported on this photosemiconductor electrode but the relationship between the Fermi level of the iridium oxide and the Fermi level of NbON as a photosemiconductor did not satisfy the relationship defined in the present invention.

These results confirmed that the photosemiconductor electrode of the present invention has significantly improved activity for water splitting reaction. The maximum photocurrent was observed in the photosemiconductor electrode in which iridium oxide was supported at a surface density of 0.96 µgcm⁻². When a photosemiconductor electrode including a niobium nitride (Nb₃N₅) film instead of a NbON film was fabricated and subjected to the same tests, the same results were obtained.

**Table 1**

| | Structure of photosemiconductor layer | Fermi level of photosemiconductor (NbON) (eV) | Fermi level of iridium oxide (eV) | Surface density of iridium oxide (µgcm⁻²) | Photo-current (µA) |
|---|---|---|---|---|---|
| Example 1 | Iridium oxide-supported NbON | -4.42 | -4.62 | 0.15 | 73.8 |
| Example 2 | Iridium oxide-supported NbON | -4.42 | -4.62 | 0.41 | 91.7 |
| Example 3 | Iridium oxide-supported NbON | -4.42 | -4.62 | 0.96 | 215.5 |
| Example 4 | Iridium oxide-supported NbON | -4.42 | -4.62 | 1.03 | 201.3 |
| Example 5 | Iridium oxide-supported NbON | -4.42 | -4.62 | 2.00 | 145.0 |
| Com. Example 1 | NbON | -4.42 | -4.62 | 0 | 53.8 |
| Com. Example 2 | Iridium oxide-supported NbON | -4.42 | -4.25 | 1.01 | 18.1 |

### INDUSTRIAL APPLICABILITY

According to the present invention, it is possible to achieve an improvement in water splitting activity of a visible-light responsive photosemiconductor electrode. Therefore, the photosemiconductor electrode of the present invention is useful in a hydrogen generating apparatus and an energy system for water splitting by sunlight.

## Claims

1. A photosemiconductor electrode comprising:
a conductor; and
a first semiconductor layer provided on the conductor, wherein
the first semiconductor layer comprises a photosemiconductor and IrO₂,
a Fermi level of the IrO₂ is more negative than a Fermi level of the photosemiconductor and is more negative than -4.44 eV, with respect to a vacuum level,
the photosemiconductor is an n-type semiconductor composed of NbON or a Nb₃N₅,
the IrO₂ in the first semiconductor layer has a surface density of more than 0 and 2.00 µgcm⁻² or less, and
the first semiconductor layer comprises a photosemiconductor film containing the photosemiconductor and the IrO₂, the IrO₂ being supported on a surface of the photosemiconductor film.

2. The photosemiconductor electrode according to claim 1, wherein
the first semiconductor layer comprises the IrO₂ in the form of nanoparticles, and
the nanoparticles have a primary particle diameter of 100 nm or less.

3. A photoelectrochemical cell comprising:
the photosemiconductor electrode according to claim 1;
a counter electrode connected electrically to the conductor in the photosemiconductor electrode; and
a container containing the photosemiconductor electrode and the counter electrode.

4. The photoelectrochemical cell according to claim 3, further comprising a water-containing electrolyte in contact with a surface of the photosemiconductor electrode and a surface of the counter electrode in the container.

5. An energy system comprising:
the photoelectrochemical cell according to claim 3;
a hydrogen storage that is connected to the photoelectrochemical cell by a first pipe and that stores hydrogen generated in the photoelectrochemical cell;
a fuel cell that is connected to the hydrogen storage by a second pipe and that converts the hydrogen stored in the hydrogen storage into electricity.

## Patentansprüche

1. Fotohalbleiterelektrode, mit:
einem Leiter und
einer ersten Halbleiterschicht, die auf dem Leiter vorgesehen ist, wobei die erste Halbleiterschicht einen Fotohalbleiter und IrO₂ aufweist,
ein Fermi-Niveau des IrO₂ negativer ist als ein Fermi-Niveau des Fotohalbleiters und mit Bezug auf ein Vakuumniveau negativer ist als -4,44 eV,
der Fotohalbleiter ein n-Typ-Halbleiter gebildet aus NbON oder Nb₃N₅ ist,
das IrO₂ in der ersten Halbleiterschicht eine Oberflächendichte von mehr als 0 und 2,00 µgcm⁻² oder weniger aufweist und
die erste Halbleiterschicht einen Fotohalbleiterfilm mit dem Fotohalbleiter und dem IrO₂ aufweist, wobei das IrO₂ auf einer Oberfläche des Fotohalbleiterfilms getragen wird.

2. Fotohalbleiterelektrode nach Anspruch 1, wobei
die erste Halbleiterschicht das IrO₂ in Form von Nanopartikeln aufweist und
die Nanopartikel einen primären Partikeldurchmesser von 100 nm oder weniger aufweisen.

3. Fotoelektrochemische Zelle, mit:
der Fotohalbleiterelektrode nach Anspruch 1,
einer Gegenelektrode, die elektrisch mit dem Leiter in der Fotohalbleiterelektrode verbunden ist, und
einem Behälter, der die Fotohalbleiterelektrode und die Gegenelektrode aufnimmt.

4. Fotoelektrochemische Zelle nach Anspruch 3, ferner mit einem wasserhaltigen Elektrolyten in Kontakt mit einer Oberfläche der Fotohalbleiterelektrode und einer Oberfläche der Gegenelektrode in dem Behälter.

5. Energiesystem, mit:
der fotoelektrochemischen Zelle nach Anspruch 3,
einem Wasserstoffspeicher, der mit der fotoelektrochemischen Zelle über eine erste Röhre verbunden ist und der Wasserstoff speichert, der in der fotoelektrochemischen Zelle erzeugt wird,
einer Brennstoffzelle, die mit dem Wasserstoffspeicher über eine zweite Röhre verbunden ist und die den Wasserstoff, der in dem Wasserstoffspeicher gespeichert ist, in Elektrizität umsetzt.

## Revendications

1. Electrode photo-semiconductrice comprenant:
un conducteur et
une première couche semiconductrice qui est prévue sur le conducteur, dans laquelle
la première couche semiconductrice comprend un photo-semiconducteur et de l'IrO₂,
un niveau de Fermi de l'IrO₂ est plus négatif qu'un niveau de Fermi du photo-semiconducteur et est plus négatif que -4,44 eV, par rapport à un niveau de vide,
le photo-semiconducteur est un semiconducteur de type n composé de NbON ou Nb₃N₅,
l'IrO₂ dans la première couche semiconductrice présente une densité de surface supérieure à 0 et 2,00 µgcm⁻² ou moins, et
la première couche semiconductrice comprend un film photo-semiconducteur contenant le photo-semiconducteur et l'IrO₂, l'IrO₂ étant supporté sur une surface du film photo-semiconducteur.

2. Electrode photo-semiconductrice selon la revendication 1, dans laquelle
la première couche semiconductrice comprend l'IrO₂ sous la forme de nanoparticules, et
les nanoparticules présentent un diamètre de particule primaire de 100 nm ou moins.

3. Cellule photo-électrochimique comprenant:
l'électrode photo-semiconductrice selon la revendication 1,
une contre-électrode connectée électriquement au conducteur dans l'électrode photo-semiconductrice, et
un récipient contenant l'électrode photo-semiconductrice et la contre-électrode.

4. Cellule photo-électrochimique selon la revendication 3, comprenant en outre un électrolyte contenant de l'eau en contact avec une surface de l'électrode photo-semiconductrice et une surface de la contre-électrode dans le récipient.

5. Système d'énergie comprenant:
la cellule photo-électrochimique selon la revendication 3,
un réservoir d'hydrogène qui est relié à la cellule photo-électrochimique par un premier tube et qui stocke de l'hydrogène généré dans la cellule photo-électrochimique,
une pile à combustible qui est reliée audit réservoir d'hydrogène par un deuxième tube et qui convertit en électricité l'hydrogène stocké dans le réservoir d'hydrogène.
